# FASCICULE DE BREVET EUROPEEN

(11) **EP 1 099 813 B1**
(45) Date de publication et mention de la délivrance du brevet: **07.04.2004**
(21) Numéro de dépôt: 00403085.4
(22) Date de dépôt: 07.11.2000
(51) Int. Cl.: E05B 49/00, B60R 25/00

(54) **Système d'accès dit "mains libres" pour un véhicule automobile équipé de moyens indicateurs**
Mit Warnmitteln ausgerüstetes Freihandzugangssystem für Kraftfahrzeuge
Hand-free access system for a motor vehicle equipped with warning means

(30) Priorité: 10.11.1999 FR 9914106
(43) Date de publication de la demande: 16.05.2001
(73) Titulaire: VALEO SECURITE HABITACLE S.A.S., 94042 Créteil Cédex (FR)
(72) Inventeur: Baudard, Xavier, 75016 Paris (FR); Morillon, Jacques, 91300 Massy (FR)
(74) Mandataire: Hervouet, Sylvie

(56) Documents cités:
- EP-A- 0 523 602
- DE-A- 19 534 416
- DE-C- 19 802 532
- DE-U- 9 111 651
- FR-A- 2 773 938
- US-A- 5 561 331

## Description

La présente invention concerne un système d'accès dit "mains libres" pour un véhicule automobile, comportant un moyen d'identification installé sur le véhicule et au moins un identifiant porté par un utilisateur.

Dans un système d'accès dit "mains libres", un échange à distance de données s'établit entre le moyen d'identification et l'identifiant pour commander les moyens de verrouillage des ouvrants du véhicule, lorsque le moyen d'identification a authentifié l'identifiant. Dans ce type de système, l'utilisateur doit, tout d'abord, pour obtenir l'accès, faire débuter une opération d'identification. Le démarrage de l'opération peut être obtenu par exemple par action sur un bouton de commande situé sur l'ouvrant, ou par une commande à distance, ou éventuellement par un détecteur de présence installé dans l'habitacle du véhicule.

Dans la pratique, des problèmes peuvent survenir lors de l'utilisation d'un tel système d'accès, notamment dans l'utilisation de l'identifiant destiné à être porté par un utilisateur.

Par exemple, le verrouillage du véhicule est habituellement commandé lorsqu'un utilisateur portant un identifiant, généralement le conducteur du véhicule, quitte le véhicule après avoir effectué une action donnée. Cet utilisateur peut avoir oublié quelle est l'action donnée au véhicule une fois qu'il s'en est éloigné. Dans ce cas, il peut sentir le besoin, pour se rassurer, de revenir verrouiller le véhicule ou d'envoyer au moyen d'identification un ordre de verrouillage alors que le véhicule est effectivement déjà verrouillé. En outre, dans certains systèmes d'accès, l'identifiant est équipé d'une télécommande, par exemple un transpondeur disposé dans un badge, une tête de clé ou un porte-clés, et un même bouton de commande sur l'identifiant peut servir à envoyer au véhicule à la fois les ordres de verrouillage et les ordres de déverrouillage. Si le véhicule est déjà verrouillé, l'ordre envoyé est en réalité un ordre de déverrouillage, et inversement. En outre, des problèmes peuvent également survenir lorsque l'utilisateur appuie une seconde fois par inadvertance sur ce bouton de commande, ou après une série d'appuis intempestifs. L'utilisateur ne sait alors plus quel est l'état de verrouillage réel du véhicule et risque de commander, pour se rassurer, un état contraire de ce qu'il souhaite.

L'invention a pour but de pallier les inconvénients précités en proposant un système d'accès dit "mains libres", qui permette à l'utilisateur équipé d'un identifiant autorisé de savoir l'état dans lequel il a laissé le véhicule, une fois qu'il s'en est éloigné.

A cet effet, l'invention a pour objet un système d'accès dit "mains libres" pour un véhicule automobile, ledit système comportant un moyen d'identification installé sur le véhicule et apte à commander des moyens de verrouillage des ouvrants du véhicule et au moins un identifiant destiné à être porté par un utilisateur et apte à établir un échange à distance de données avec le moyen d'identification pour commander les moyens de verrouillage, lorsque le moyen d'identification a authentifié ledit identifiant, caractérisé par le fait que, lorsqu'au moins un ordre de verrouillage ou de déverrouillage est reçu par ledit moyen d'identification, ledit moyen d'identification est apte à envoyer, lors de l'échange d'identification entre un identifiant extérieur et le moyen d'identification, au moins un signal représentatif des informations relatives au dernier ordre de verrouillage ou de déverrouillage qu'il a reçu, à l'identifiant authentifié situé à l'extérieur de l'habitacle du véhicule, ledit identifiant étant équipé de moyens indicateurs et de moyens de mémorisation de données respectivement aptes à indiquer et mémoriser lesdites informations.

Toutefois, étant donné qu'un même moyen d'identification est généralement associé à plusieurs identifiants destinés à plusieurs utilisateurs, il peut se produire qu'un utilisateur muni de son propre identifiant quitte le véhicule alors qu'un autre identifiant est encore dans le véhicule. Si un voleur pénètre alors par effraction dans le véhicule, il peut alors prendre possession de l'identifiant laissé dans le véhicule, cet identifiant pouvant permettre le démarrage du véhicule. Par conséquent, il est avantageux pour l'utilisateur d'être informé non seulement du dernier ordre reçu par le moyen d'identification mais aussi de la présence éventuelle d'un ou plusieurs identifiants à l'intérieur du véhicule.

De manière avantageuse, lorsque le dernier ordre reçu par le moyen d'identification est un ordre de verrouillage, ledit moyen d'identification est apte à procéder à une interrogation de présence éventuelle d'identifiants à l'intérieur du véhicule, cette interrogation consistant à envoyer un signal d'interrogation dans l'habitacle et à détecter un signal de réponse éventuel de chaque identifiant encore présent dans l'habitacle, ledit moyen d'identification étant apte, en cas de réception d'un signal de réponse, à envoyer à l'identifiant authentifié extérieur au moins un signal représentatif des informations relatives à la présence détectée dudit identifiant intérieur, les moyens indicateurs et de mémorisation de l'identifiant extérieur étant aptes à indiquer et à mémoriser respectivement les informations de présence précitées.

Dans une forme particulière de réalisation, les moyens indicateurs de chaque identifiant comportent un organe indicateur unique, destiné à indiquer les informations relatives aux ordres de verrouillage et de déverrouillage.

Dans ce cas, lorsque le résultat de l'interrogation à l'intérieur du véhicule est positif, c'est à dire lorsqu'il y a au moins un identifiant détecté présent à l'intérieur de l'habitacle du véhicule, le signal correspondant envoyé à l'identifiant extérieur est apte à inverser l'information relative au dernier ordre, qui est destinée à être indiquée par l'organe indicateur.

Etant donné que l'indication des informations relatives au dernier ordre de verrouillage ou de déverrouillage dépend du résultat de l'interrogation à l'intérieur du véhicule, l'utilisateur portant l'identifiant extérieur authentifié dispose également d'une information concernant la présence éventuelle d'identifiants à l'intérieur du véhicule, à condition de connaître la signification de l'indication donnée par le moyen indicateur.

Selon une autre forme particulière de réalisation, les moyens indicateurs de chaque identifiant comportent au moins deux organes indicateurs distincts, l'un de ces organes étant destiné à indiquer les informations relatives aux ordres de verrouillage et de déverrouillage, et un autre de ces organes étant destiné à indiquer les informations relatives au résultat de l'interrogation de présence d'identifiants à l'intérieur du véhicule.

Dans une forme de réalisation particulière, les organes indicateurs comportent au moins une diode électroluminescente.

Selon une autre caractéristique, le résultat de l'interrogation de présence à l'intérieur de l'habitacle est indiqué par une diode de couleur différente de la diode indiquant les informations relatives aux ordres de verrouillage ou de déverrouillage.

Selon une autre caractéristique, les moyens indicateurs sont des moyens d'affichage numériques.

Selon encore une autre caractéristique, chaque identifiant comporte un organe d'actionnement, par exemple un bouton ou une touche, pour déclencher l'indication des informations mémorisées par lesdits moyens indicateurs.

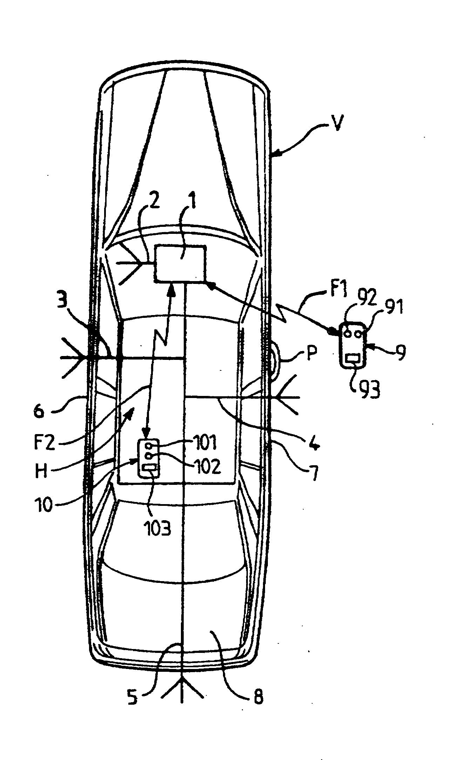

Pour mieux faire comprendre l'objet de l'invention, on va maintenant décrire à titre d'exemple purement illustratif et non limitatif, un mode de réalisation particulier représenté sur la figure unique du dessin annexé. Cette figure représente schématiquement en vue de dessus un véhicule automobile équipé du système selon l'invention.

Sur cette figure, on a représenté un véhicule V qui comporte une unité électronique de gestion principale 1, incorporant un moyen d'identification et reliée à une pluralité d'antennes 2 à 5. L'antenne 2 est agencée à l'intérieur de l'habitacle H du véhicule et présente une zone de couverture qui s'étend sensiblement dans tout l'habitacle. Les antennes 3 et 4 sont extérieures à l'habitacle H du véhicule et situées par exemple, dans les poignées P des portes latérales 6,7. L'antenne 5 est également extérieure à l'habitacle H et s'étend vers l'arrière du véhicule, sensiblement au niveau du hayon du coffre 8. L'antenne 2 est localisée de préférence au niveau du mécanisme de blocage de la colonne de direction. Le moyen d'identification comporte un émetteur et un récepteur en basse fréquence et/ou en radiofréquence, qui permettent d'échanger des données avec plusieurs identifiants, par exemple les identifiants 9, 10. Ces identifiants 9, 10 se présentent, par exemple sous la forme de badges qui sont en liaison hertzienne, comme matérialisé par les flèches F1 et F2, avec le moyen d'identification intégré à l'unité électronique de gestion principale 1.

Chaque identifiant 9, 10 comporte en outre des moyens indicateurs 91, 92, 101, 102 et des moyens de mémorisation de données non représentés. Les références 93 et 103 désignent une touche ou un bouton d'actionnement sélectif pour activer les moyens indicateurs de l'identifiant. Les moyens indicateurs comportent des organes indicateurs 91, 101 pour indiquer des informations relatives au dernier ordre de verrouillage ou de déverrouillage et des organes indicateurs 92, 102 pour indiquer des informations relatives à la détection éventuelle d'un identifiant à l'intérieur du véhicule.

On va maintenant décrire brièvement le fonctionnement de l'invention. La figure du dessin annexé illustre le cas où un identifiant 10 a été oublié dans le véhicule, après verrouillage des portières 6, 7. Lorsqu'un utilisateur portant l'identifiant 9 quitte le véhicule en ayant lancé un ordre de verrouillage et en laissant un autre identifiant 10 dans l'habitacle H, l'unité centrale de gestion 1 détecte la fermeture des portières 6, 7, et provoque l'émission par le moyen d'identification d'un signal d'interrogation vers l'identifiant extérieur 9, en basse fréquence ou en radiofréquence, comme matérialisé par la flèche F1, par l'intermédiaire des antennes extérieures 3 à 5. L'identifiant 9 envoie au moyen d'identification un signal de réponse, en basse fréquence ou en radiofréquence, pour autoriser le verrouillage du véhicule V.

L'unité électronique de gestion principale 1 commande également, pendant l'échange d'identification entre l'identifiant extérieur 9 et le véhicule, l'envoi d'un signal d'interrogation à l'intérieur de l'habitacle du véhicule, par l'intermédiaire de l'antenne interne 2. L'identifiant 10 se trouvant à l'intérieur de l'habitacle H est réveillé par le signal d'interrogation provenant de l'antenne 2 et émet en réponse un signal de présence, comme matérialisé par la flèche F2.

L'unité centrale de gestion provoque l'émission, par le moyen d'identification, d'un signal représentatif du dernier ordre de verrouillage, par l'intermédiaire des antennes extérieures 3 à 5. Ce signal de dernier ordre est reçu par l'identifiant 9, qui mémorise les informations transmises par ce signal. Ces informations mémorisées dans l'identifiant sont aptes à être utilisées pour allumer l'organe indicateur 91 constitué par exemple par une diode de couleur rouge, lorsque l'utilisateur appuie sur le bouton 93, en vue de vérifier si le véhicule qu'il a quitté est bien verrouillé.

Simultanément à ce premier signal, ou postérieurement, l'unité centrale 1 est apte à émettre un deuxième signal représentatif de la présence de l'identifiant intérieur 10 dans le véhicule, vers l'identifiant extérieur 9. L'information contenue dans ce deuxième signal est mémorisée dans un autre emplacement de la mémoire de l'identifiant 9, de façon à être utilisée pour allumer l'autre organe indicateur 92 constitué par exemple par une diode d'une autre couleur, lorsque l'utilisateur a appuyé sur ledit bouton 93.

Bien entendu, si l'unité centrale n'a pas détecté d'identifiant intérieur, elle n'envoie pas ce deuxième signal, et la deuxième diode 92 reste éteinte, lorsque le bouton 93 est activé. D'autre part, si le bouton 93 est activé, mais que la diode 91 ne s'allume pas, l'utilisateur est informé que le véhicule n'est pas verrouillé.

En variante, on peut prévoir qu'une diode sera de couleur verte, dédiée à l'indication d'un état déverrouillé du véhicule et une autre diode rouge sera dédiée à l'indication de l'état verrouillé.

On peut également prévoir que l'unité centrale 1 provoque automatiquement le déverrouillage du véhicule lorsqu'elle détecte la présence d'un identifiant intérieur, de sorte que le dernier ordre transmis sera un ordre de déverrouillage. Dans ce cas, si l'utilisateur envoie un deuxième ordre consécutif de verrouillage, malgré qu'un identifiant soit toujours présent dans l'habitacle, on peut prévoir que l'unité centrale laissera le véhicule verrouillé.

Bien entendu, l'identifiant peut comporter une seule diode, à savoir la diode 91 pour l'identifiant 9, mais dans ce cas, la réception du deuxième signal de présence d'identifiant intérieur aura pour effet d'inverser l'indication fournie par la diode 91, en cas d'appui sur le bouton 93.

## Revendications

1. Système d'accès dit "mains libres" pour un véhicule automobile (V), ledit système comportant un moyen d'identification (1) installé sur le véhicule et apte à commander des moyens de verrouillage des ouvrants (6-8) du véhicule (V) et au moins un identifiant (9, 10) destiné à être porté par un utilisateur et apte à établir un échange à distance de données avec le moyen d'identification pour commander les moyens de verrouillage, lorsque le moyen d'identification a authentifié ledit identifiant, dans lequel système, lorsqu'au moins un ordre de verrouillage ou de déverrouillage est reçu par ledit moyen d'identification (1), ledit moyen d'identification est apte à envoyer, lors de l'échange d'identification entre un identifiant extérieur et le moyen d'identification, au moins un signal représentatif des informations relatives au dernier ordre de verrouillage ou de déverrouillage qu'il a reçu à l'identifiant authentifié (9) situé à l'extérieur de l'habitacle (H) du véhicule, ledit identifiant (9) étant équipé de moyens indicateurs (91, 92) et de moyens de mémorisation de données, respectivement aptes à indiquer et mémoriser lesdites informations, **caractérisé par le fait que**, lorsque le dernier ordre reçu par le moyen d'identification (1) est un ordre de verrouillage, ledit moyen d'identification est apte à procéder à une interrogation de présence éventuelle d'identifiants (10) à l'intérieur du véhicule (V), cette interrogation consistant à envoyer un signal d'interrogation dans l'habitacle (H) et à détecter un signal de réponse éventuel de chaque identifiant encore présent dans l'habitacle, ledit moyen d'identification étant apte, en cas de réception d'un signal de réponse, à envoyer à l'identifiant authentifié extérieur (9) au moins un signal représentatif des informations relatives à la présence détectée dudit identifiant intérieur (10), les moyens indicateurs (91, 92) et de mémorisation de l'identifiant extérieur (9) étant aptes à indiquer et à mémoriser respectivement les informations de présence précitées.

2. Système selon la revendication 1, **caractérisé par le fait que** les moyens indicateurs précités de chaque identifiant comportent un organe indicateur unique (91, 101), destiné à indiquer les informations relatives aux ordres de verrouillage et de déverrouillage.

3. Système selon la revendication 2, **caractérisé par le fait que**, lorsque le résultat de l'interrogation à l'intérieur du véhicule est positif, c'est-à-dire lorsqu'il y a au moins un identifiant (10) détecté présent à l'intérieur de l'habitacle (H) du véhicule (V), le signal correspondant envoyé à l'identifiant extérieur (9) est apte à inverser l'information relative au dernier ordre, qui est destinée à être indiquée par l'organe indicateur (91).

4. Système selon la revendication 1, **caractérisé par le fait que** les moyens indicateurs précités comportent au moins deux organes indicateurs distincts (91, 92, 101, 102), l'un de ces organes (91, 101) étant destiné à indiquer les informations relatives aux ordres de verrouillage et de déverrouillage, et un autre de ces organes (92, 102) étant destiné à indiquer les informations relatives au résultat de l'interrogation de présence d'identifiants (10) à l'intérieur du véhicule (V).

5. Système selon l'une des revendications 2 à 4, **caractérisé par le fait que** chaque organe indicateur (91, 92, 101, 102) est une diode électroluminescente.

6. Système selon la revendication 5, **caractérisé par le fait que** la diode électroluminescente est apte à s'allumer d'une couleur donnée ou à s'éteindre selon l'information reçue en provenance du véhicule.

7. Système selon la revendication 5 ou 6, **caractérisé par le fait que**, le résultat de l'interrogation de présence d'identifiants (10) à l'intérieur de l'habitacle (H) est indiqué par une diode (92, 102) de couleur différente de la diode (91, 101) indiquant les informations relatives aux ordres de verrouillage ou de déverrouillage.

8. Système selon l'une des revendications 1 à 4, **caractérisé par le fait que** les moyens indicateurs (91, 92, 101, 102) sont des moyens d'affichage numériques.

9. Système selon l'une des revendications 1 à 7, **caractérisé par le fait que** chaque identifiant comporte un organe d'actionnement, par exemple un bouton ou une touche (93, 103), pour déclencher l'indication des informations mémorisées par lesdits moyens indicateurs.

## Patentansprüche

1. Freihand-Zugangssystem für ein Kraftfahrzeug (V), wobei das genannte System ein Identifikationsmittel (1), das am Fahrzeug installiert ist und Mittel zum Verriegeln der Türen (6 - 8) des Fahrzeugs (V) steuern kann, und zumindest einen Identifizierer (9, 10) enthält, der zum Mitführen durch einen Benutzer bestimmt ist und einen Datenaustausch über eine Entfernung mit dem Identifikationsmittel erstellen kann, um die Verriegelungsmittel dann zu betätigen, wenn das Identifikationsmittel den Identifizierer authentifiziert hat, wobei bei zumindest einem vom Identifikationsmittel (1) empfangenen Verriegelungs- bzw. Entriegelungsbefehl das Identifikationsmittel beim Identifikationsaustausch zwischen einem äußeren Identifizierer und dem Identifikationsmittel zumindest ein Signal aussenden kann, das repräsentativ für Informationen über den letzten Verriegelungs- bzw. Entriegelungsbefehl ist, das es am authentifizierten Identifizierer (9) empfangen hat, der sich außerhalb des Fahrgastraums (H) des Fahrzeugs befindet, wobei der Identifizierer (9) mit Anzeigemitteln (91, 92) und mit Datenspeichermitteln ausgestattet ist, welche die genannten Informationen anzeigen bzw. speichern können, **dadurch gekennzeichnet, dass** dann, wenn der vom Identifikationsmittel (1) zuletzt empfangene Befehl ein Verriegelungsbefehl ist, das Identifikationsmittel eine Abfrage bezüglich innerhalb des Fahrzeugs (V) eventuell vorhandener Identifizierer (10) vornehmen kann, wobei diese Abfrage darin besteht, ein Abfragesignal in den Fahrgastraum (H) zu senden und ein eventuelles Antwortsignal eines jeden im Fahrgastraum noch vorhandenen Identifizierers zu erfassen, wobei das Identifikationsmittel bei Empfang eines Antwortsignals dem authentifizierten äußeren Identifizierer (9) zumindest ein Signal senden kann, das repräsentativ für Informationen über das erfasste Vorhandensein des inneren Identifizierers (10) ist, wobei die Anzeigemittel (91, 92) und die Speichermittel des äußeren Identifizierers (9) die vorgenannten Anwesenheitsinformationen anzeigen bzw. speichern können.

2. System nach Anspruch 1, **dadurch gekennzeichnet, dass** die vorgenannten Anzeigemittel eines jeden Identifizierers ein einziges Anzeigeglied (91, 101) enthalten, das dazu bestimmt ist, die Informationen über die Verriegelungs- und Entriegelungsbefehle anzuzeigen.

3. System nach Anspruch 2, **dadurch gekennzeichnet, dass** dann, wenn das Ergebnis der Abfrage innerhalb des Fahrzeugs positiv ist, d. h. bei zumindest einem als innerhalb des Fahrgastraums (H) des Fahrzeugs (V) vorhanden erfassten Identifizierer (10), das entsprechende dem äußeren Identifizierer (9) zugesandte Signal die Information über den letzten Befehl umkehren kann, die dazu bestimmt ist, vom Anzeigeglied (91) angezeigt zu werden.

4. System nach Anspruch 1, **dadurch gekennzeichnet, dass** die vorgenannten Anzeigemittel zumindest zwei unterschiedliche Anzeigeglieder (91, 92, 101, 102) enthalten, wobei das eine dieser Glieder (91, 101) dazu bestimmt ist, die Informationen über die Verriegelungs- und Entriegelungsbefehle anzuzeigen und das andere Glied (92, 102) dazu bestimmt ist, die Informationen über das Ergebnis der Abfrage bezüglich des Vorhandenseins von Identifizierern (10) innerhalb des Fahrzeugs (V) anzuzeigen.

5. System nach einem der Ansprüche 2 bis 4, **dadurch gekennzeichnet, dass** jedes Anzeigeglied (91, 92, 101, 102) eine LED-Diode ist.

6. System nach Anspruch 5, **dadurch gekennzeichnet, dass** die LED-Diode je nach vom Fahrzeug stammender, erhaltener Information in einer gegebenen Farbe aufleuchten bzw. erlöschen kann.

7. System nach Anspruch 5 oder 6, **dadurch gekennzeichnet, dass** das Ergebnis der Abfrage bezüglich des Vorhandenseins von Identifizierern (10) innerhalb des Fahrgastraums (H) von einer Diode (92, 102) in einer Farbe angezeigt wird, die sich von der der Diode (91, 101) unterscheidet, welche die Informationen über die Verriegelungs- bzw. Entriegelungsbefehle anzeigt.

8. System nach einem der Ansprüche 1 bis 4, **dadurch gekennzeichnet, dass** die Anzeigemittel (91, 92, 101, 102) digitale Anzeigemittel sind.

9. System nach einem der Ansprüche 1 bis 7, **dadurch gekennzeichnet, dass** jeder Identifizierer ein Betätigungsglied, beispielsweise einen Knopf oder eine Taste (93, 103) enthält, um das Anzeigen der abgespeicherten Informationen von den Anzeigemitteln auszulösen.

## Claims

1. So-called "hands free" access system for a motor vehicle (V), the said system comprising a means of identification (1) installed on the vehicle and able to control means for locking the openable panels (6-8) of the vehicle (V) and at least one identifier (9, 10) intended to be carried by a user and able to set up a remote exchange of data with the means of identification so as to control the locking means, when the means of identification has authenticated the said identifier, in which system, when at least one locking or unlocking order is received by the said means of identification (1), the said means of identification is able to send, during the exchange of identification between an outside identifier and the means of identification, at least one signal representative of the information relating to the last locking or unlocking order that it has received to the authenticated identifier (9) situated outside the cabin (H) of the vehicle, the said identifier (9) being equipped with indicator means (91, 92) and with data storage means, respectively able to indicate and to store the said information, **characterized in that**, when the last order received by the means of identification (1) is a locking order, the said means of identification is able to proceed to an interrogation of possible presence of identifiers (10) inside the vehicle (V), this interrogation consisting in sending an interrogation signal into the cabin (H) and in detecting a possible response signal from each identifier still present in the cabin, the said means of identification being able, in case of receipt of a response signal, to send the outside authenticated identifier (9) at least one signal representative of the information relating to the detected presence of the said inside identifier (10), the indicator means (91, 92) and the means for storing the outside identifier (9) being able to indicate and to store respectively the aforesaid presence information.

2. System according to Claim 1, **characterized in that** the aforesaid indicator means of each identifier comprise a unique indicator member (91, 101), intended to indicate the information relating to the locking and unlocking orders.

3. System according to Claim 2, **characterized in that**, when the result of the interrogation inside the vehicle is positive, that it is to say when there is at least one identifier (10) detected present inside the cabin (H) of the vehicle (B), the corresponding signal sent to the outside identifier (9) is able to invert the information item relating to the last order and which is intended to be indicated by the indicator member (91 ).

4. System according to Claim 1, **characterized in that** the aforesaid indicator means comprise at least two separate indicator members (91, 92, 101, 102), one of these members (91, 101) being intended to indicate the information relating to the locking and unlocking orders, and another of these members (92, 102) being intended to indicate the information relating to the result of the interrogation of presence of identifiers (10) inside the vehicle (V).

5. System according to one of Claims 2 to 4, **characterized in that** each indicator member (91, 92, 101, 102) is a light-emitting diode.

6. System according to Claim 5, **characterized in that** the light-emitting diode is able to come on with a given colour or to go off according to the information item received from the vehicle.

7. System according to Claim 5 or 6, **characterized in that**, the result of the interrogation of presence of identifiers (10) inside the cabin (H) is indicated by a diode (92, 102) of different colour from the diode (91, 101) indicating the information relating to the locking and unlocking orders.

8. System according to one of Claims 1 to 4, **characterized in that** the indicator means (91, 92, 101, 102) are digital means of display.

9. System according to one of Claims 1 to 7, **characterized in that** each identifier comprises an actuation member, for example a button (93, 103), for triggering the indication of the information stored by the said indicator means.
